# EUROPEAN PATENT APPLICATION

(11) **EP 4 557 689 A1**
(43) Date of publication of application: **21.05.2025**
(21) Application number: 24213693.5
(22) Date of filing: 18.11.2024
(51) Int. Cl.: H04L 45/16, H04L 45/00, H04L 45/50

(54) **SEGMENT ROUTING IPV6 EXTENSION TO SUPPORT MULTICAST IN RAN AND PC**

(30) Priority: 16.11.2023 IN 202321077940; 15.11.2024 US 202418948812
(71) Applicant: Mavenir Systems, Inc., Richardson, TX 75081 (US)
(72) Inventor: Peter, Anish, Bengaluru (IN)
(74) Representative: dompatent von Kreisler Selting Werner - Partnerschaft von Patent- und Rechtsanwälten mbB

(57) **Abstract**

Point-to-Multipoint (p2mp) delivery of data in a SRv6 network for multicast/p2mp data delivery. Function and Argument bits are encoded Segment Routing (SRv6) as a Last Significant Bit in an IPv6 address. An SRv6 node can be encoded with a Segment ID to tunnel multicast through a node that does not support Bit Index Explicit Replication (BIER) SRv6 forwarding.

## Description

### a. Field of the Disclosure

The present disclosure relates to systems and methods for segment routed networks. The present disclosure focuses on the design of operation, administration and management of segment routed networks and various network elements of radio access networks and mobile networks.

### a. Description of the Related Art

Mobile data networks from 2g-GPRS onwards used GTP for Userplane data transmission. GTP designed for 2g poses limitations, including a need for application layer forwarding. The control plane for 5g has migrated from GTP-C to SCTP-based messaging. IP data network forwarding and has had many major technology improvements over the past few decades, which are needed for contemporary networks. Segment routing provides versatile networking functions that provides networking with zero packet drops on link failure, SDN, millisecond rerouting, multi topology/flexible algorithmic networking, all of which can have major use cases in mobile distribution networks. In SR, SR in IPv6 (aka SRv6) is already deployed in some mobile networks in production.

One of the major limitations in segment routed networks is a limitation on the functionality of multicast/ P2MP data delivery.

MBMS extensions for the mobile network as of the present disclosure have limited use-cases and vendor support. But with a major push towards machine-to-machine communications and mobile TV, the kind of applications gaining fast traction on 5g+ networks and the application for p2mp delivery for resource conservation can help achieve better network economy.

With the mobile infrastructure network (RAN+PC) adapting more packet oriented and edge computing related advancements, typical user equipment originated traffic may have to traverse over a service chain and may need to deliver to multiple applications.

For example, a surveillance camera feed can be used for various applications such as traffic management, tracking traffic violations, surveillance, multiple backups and more. Each of these applications would typically involve service chaining. Such data, the sources of which involve massive machine-to-machine data replication, demands P2MP traffic forwarding. Newer applications need more from network for optimal performance.

### SUMMARY

In an implementation, described is a method comprising: providing an Internet Protocol Version (IPv6) index format including a bitstring configured to address egress routers in a Bit Index Explicit Replication (BEIR) subdomain for Point-to-Multipoint delivery of data for Segment Routing (SR), the bitstring being a Bit-Index-6 format (BI6) configured to identify each of the egress routers with a Bit-Forwarding Router id (BFR-id), wherein the BFR-id translates to a Set Identifier (SI) and bitstring, wherein the SI is identified by a SI Locator, the SI Locator is a routable prefix configured to reach a specific set of the egress routers in the SI, and the IPv6 index format includes a Function bit and an Argument bit each configured as a Last Significant Bit (LSB) in an IPv6 address. The bitstring can be encoded in a bitstring part of the BI6.

The format can comprise multiple Segment IDs (SIDs), wherein the multiple SIDs are for one or more of: sending a packet though a predefined path to a first router of the egress routers in the BIER subdomain; sending a packet though a legacy device that does not support BI6; or sending a packet on to a node that is reachable over a transit LAN.

The SI Locator can be present in a destination address in an IPv6 header that provides a map of a Segment Routing Header (SRH). The SRH can comprise an SID vector.

In an implementation, the SRH comprises: a Next Header configured identify a type of header immediately following ta Routing header; a Segments Left configured to list the number of route segments remaining; a Last Entry comprising the index in the Segment List including SID of the last element of the Segment List; and a Segment List [0..n] configured for the 128-bit IPv6 addresses representing the nth segment in the Segment List, wherein the Segment List is encoded starting from the last segment of an SR Policy. The method can further comprise: encoding an SID stack to specify a multihop routing chain to the SRH, and encoding the bitstring in initial SID locations of the SRH for a BIER bitmap. The bitstring length can be any multiple of 128, the value of Segments Left are set to a length of the bitstream divided by 128 plus the number of elements present in the Segment List and, after the bitstring, a BI6 top-SID follows, which includes the SI Locator bit, an Argument bit and a Function bit. The SI Locator bit has a size of 48 for a maximum BI6 addressing space of an 80 bit length, wherein the bit-index string length is determined by a Solicitor prefix length, the Argument bit and the Function bit.

In an implementation, an ingress router can be programmed to execute ingress replication of packets to multiple BIER subdomains, and wherein the ingress router is configured to introduce a path vector as an SID list on each of the packets. The SRH can comprise Flags to mark presence of the BIER Bitmap in the SRH.

In an implementation described is a method obtaining at a router a notice of a B16 capability of a neighboring device; forming a map of a BFER to the nearest BFR in an egress path; if a BFR is not connected, inserting the non-connected BFR's SID into a packet SRH prior to forwarding the packet. The method can further comprise: obtaining at the router a notice of a B16 capability of all routers in an Segment ID (IGP) area; forming a map of adjacent BFRs; if an adjacent BFR is reachable over legacy nodes, and if the adjacent BFR is not directly connected, computing a list of the legacy nodes that must be passed through to reach the adjacent BFR; maintaining by the BFR an SID vector to reach the adjacent BFR; and when the packet is forwarded to the adjacent BFR, inserting an SID vector in the packet after forwarding updates in the bitmap.

The method can further comprise: receiving at a router an BI6 packet with a penultimate SID being that of itself; stripping the SRH of all SIDs other than the SID of the B16 packet; and forwarding the packet.

In an implementation, described is a system, apparatus, and/or computer product configured to perform the methods described herein.

### BRIEF DESCRIPTION OF THE DRAWINGS

Non-limiting and non-exhaustive embodiments are described with reference to the following drawings. In the drawings, like reference numerals refer to like parts throughout the various figures unless otherwise specified. For a better understanding, reference can be configured to be made to the following Detailed Description, which is to be read in association with the accompanying drawings. The embodiments can, however, be embodied in many different forms and should not be construed as limited to the embodiments and implementations set forth herein; rather, these embodiments and implementations are provided so that this disclosure will be thorough and complete, and will fully convey the scope of the embodiments and implementations to those skilled in the art. Among other things, the various embodiments and implementations can be methods, systems, media, or devices. The following detailed description is, therefore, not to be taken in a limiting sense.
FIG. 1 shows a p2mp network topology.
FIG. 2 shows SRv6 BIER forwarding.

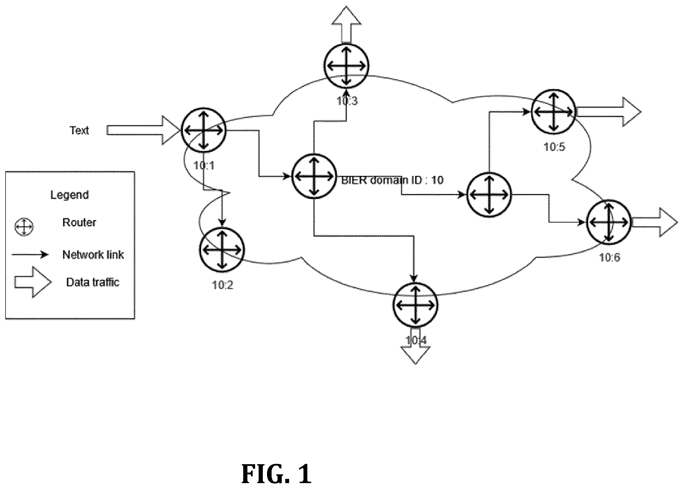

FIG. 1: shows forwarding in BIER topology when there is a need to pass over a legacy node.

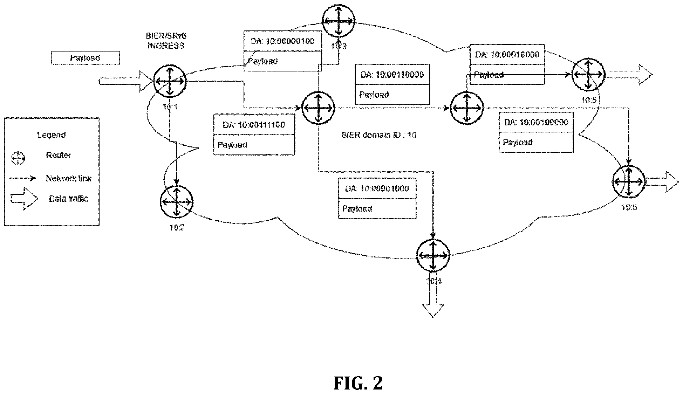

FIG. 2 shows a Srv6 BIER extension header.

### DETAILED DESCRIPTION

Reference is made to Third Generation Partnership Project (3GPP) and the Internet Engineering Task Force (IETF) in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.

### Documents

### Normative References

[RFC2119] Bradner, S., "Key words for use in RFCs to Indicate Requirement Levels", BCP 14, RFC 2119, DOI 10.17487/RFC2119, March 1997, <https://www.rfc-editor.org/info/rfc2119>.
[RFC8200] Deering, S. and R. Hinden, "Internet Protocol, Version 6 (IPv6) Specification", STD 86, RFC 8200, DOI 10.17487/RFC8200, July 2017, <https://www.rfc-editor.org/info/rfc8200>.
[RFC8279] Wijnands, IJ., Ed., Rosen, E., Ed., Dolganow, A., Przygienda, T., and S. Aldrin, "Multicast Using Bit Index Explicit Replication (BIER)", RFC 8279, DOI 10.17487/RFC8279, November 2017, <https://www.rfc-editor.org/info/rfc8279>.
[RFC8296] Wijnands, IJ., Ed., Rosen, E., Ed., Dolganow, A., Tantsura, J., Aldrin, S., and I. Meilik, "Encapsulation for Bit Index Explicit Replication (BIER) in MPLS and Non-MPLS Networks", RFC 8296, DOI 10.17487/RFC8296, January 2018, <https://www.rfc-editor.org/info/rfc8296>.
[RFC8754] Filsfils, C., Ed., Dukes, D., Ed., Previdi, S., Leddy, J., Matsushima, S., and D. Voyer, "IPv6 Segment Routing Header (SRH)", RFC 8754, DOI 10.17487/RFC8754, March 2020, <https://www.rfc-editor.org/info/rfc8754>.

### Informative References

[RFC4193] Hinden, R. and B. Haberman, "Unique Local IPv6 Unicast Addresses", RFC 4193, DOI 10.17487/RFC4193, October 2005, <https://www.rfc-editor.org/info/rfc4193>.
[RFC8689] Fenton, J., "SMTP Require TLS Option", RFC 8689, DOI 10.17487/RFC8689, November 2019, <https://www.rfc-editor.org/info/rfc8689>.

Acronmys:
2G-GPRS 2nd Generation - General Packet Radio Service
BRF Bit-Forwarding Router
BFER Bit-Forwarding Egress Routers
BFIR Bit-Forwarding Ingress Router
GTP GPRS Tunneling Protocol
IGP Interior Gateway Protocol
SR Segment Routing
IPv6 Internet Protocol Version 6
MBMS Multimedia Broadcast Multicast Service
RAN+PC Radio Access Network and Packet Core
LSB Least Significant Bit
BIER Bit Index Explicit Replication
P2MP Point-to-Multipoint
SID Segment ID
SRH Segment Routing Header
SDN Software Defined Networking
SCTP Stream Control Transmission Protocol

Throughout the specification and claims, the following terms take the meanings explicitly associated herein, unless the context clearly dictates otherwise. The term "herein" refers to the specification, claims, and drawings associated with the current application.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

The present disclosure provides embodiments of systems, devices and methods for Radio Access Networks and Cloud Radio Access Networks.

Described are implementations and use-cases for p2mp delivery of data in a SRv6 network for functionality and for multicast/p2mp data delivery. Prior p2mp on SR networks, proposals such as tree SID and egress targeted addressing implemented p2mp delivery over completely different delivery methods and schema. They all have limitations.

Accordingly, described is a method of encoding SRv6 option FUNCTION and ARGUMENT bits as LSB in IPv6 address.

Also described is a method of encoding BIER bitmap in LSBs of IPv6 address immediately preceding optional FUNCTION and ARGUMENT bits.

Also described is an anycast addressing support for all members in a BIER domain.

Also described is support for SRv6 node SID encode to tunnel multicast thought a node that does not support BIER SRv6 forwarding.

Also described is support for a higher bitmap length with a new SRH using providing longer bitmaps.

Also described is using a Flag bit in a Segment Routing header to mark the presence of a BIER Bitmap in it. Described herein is a system and method for marking the presence of a BITMAP in the SRH by means of a Flag bit B.

Also described is inserting BIER BITMAP in the SRH in the place of bottom SID and over an all-new header structure of SRH.

Described herein is a system and method to use SRH for sending the BIER bitmap in the SRH including:
a. Defining BITMAP size as a multiple of 128bits
b. Defining the SRH structure to include BITMAP, BI6 SID and other routing SIDs.
c. Defining the size calculation of the BITMAP on a packet either by known configuration or by taking the bits appearing before the SI6 SID.

Described herein is a system and method for forwarding SI6 SID in a transit LAN.

Segment routing with IPv6 as specified in RFC8689 [RFC8689] *SMTP Require TLS Option* provides a source-routing solution for next generation network requirements. More applications and use-cases are finding solutions using SRv6. Along with this comes the need to support multicasting and broadcasting in such networks.

Broadcasting typically needs a point-to-multipoint (P2MP) distribution with all the nodes in the network being receivers. Multicasting implies P2MP distribution along with multipoint-to- multipoint (MP2MP) packet distribution with the participants being pre-determined via a discovery or provisioning mechanism.

Bit-Index-Explicit-Replication specified in RFC8279 [RFC8279] *Multicast Using Bit Index Explicit Replication (BIER)* introduced a per-flow-state-free forwarding for multicast using a bit-indexed addressing of multicast receivers.

The present disclosure introduces a bitmap-based distribution schema in IPv6 networks to achieve P2MP distribution patterns. SRv6 introduced a new semantic to the IPv6 address by fragmenting the address space into a "Locator: Function: Argument" to construct and achieve the desired SR functionality. This disclosure proposes a similar treatment of IPv6 address to achieve BIER forwarding.

Throughout this disclosure, a non-reduced SID encapsulation (encap) is presented and described. A reduced SRH can also be used. This convention is followed for purposes of clear presentation.

### IPv6 Bit-Index Format

This disclosure provides a semantic to the IPv6 address as a SI_LOCATOR:BITSTRING:FUNCTION:ARGUMENT. This structure is partly implemented from SRv6. The BITSTRING part is introduced to address the egress routers in the BIER subdomain by its bit index. This format is called Bit-Index-6 format (BI6) herein.

BIER architecture envisages forwarding by identifying each egress router with a BFR-id. These BFR-id in forwarding translates to a Set-Identifier (SI) and Bitstring. In the IPv6 Bit-Index format, the SI is identified by the SI_LOCATOR and bitstring is encoded in the BITSTRING part of the BI6. The FUNCTION and ARGUMENT bits are part of the format. Depending on the network requirement, their lengths may be set to 0 for using these bits for extended bitstring.

SI_LOCATOR is defined as a routable prefix to reach the specific set of routers in a SetIdentifier (SI). Once a BI6 packet reaches a router that is part of a SI, the bit-index based part is referred to for forwarding towards the BFERs with the BIER forwarding configurations. The semantics of the FUNC and ARG bits is global in the Sub-domain. The attributes of FUNCTION and ARGUMENT bits are predetermined.

| | | | |
|---|---|---|---|
| +-+-+-+-+-+-+- | +-+-+-+-+-+-+-+-+-+-+-+-+- | -+-+-+-+ | +-+-+-+-+-+-+-+-+-+ |
| \| SI_LOCATOR \| | BITSTRING | \| FUNC \| ARG \| | |
| +-+-+-+-+-+-+- | +-+-+-+-+-+-+-+-+-+-+-+-+- | -+-+-+-+ | +-+-+-+-+-+-+-+-+-+ |

### Syntax of BIER6 address

FIG. 2 shows a Srv6 BIER extension header. This header can be utilized for BIER domains having a need for bitmap length that cannot be included in a single IPv6 address after accommodating the locator, FUNC and ARG bits. The bitwise structure of the header is designed for standardization.

The SI_Locator present in the destination (anycast) address in the IPv6 header can provide a map to the Segment Routing Header

In some scenarios there is a need to have multiple SID's to achieve the desired network forwarding. The scenarios can include:
a. For sending a packet though a predefined path to the first router in a BIER subdomain.
b. For sending a packet though a set of legacy systems that may not support BI6 forwarding.
c. When sending packet on to a node reachable over a transit LAN.

In such scenarios this disclosure provides the structure of the SRH with a SID vector in addition to BIER SID as follows.

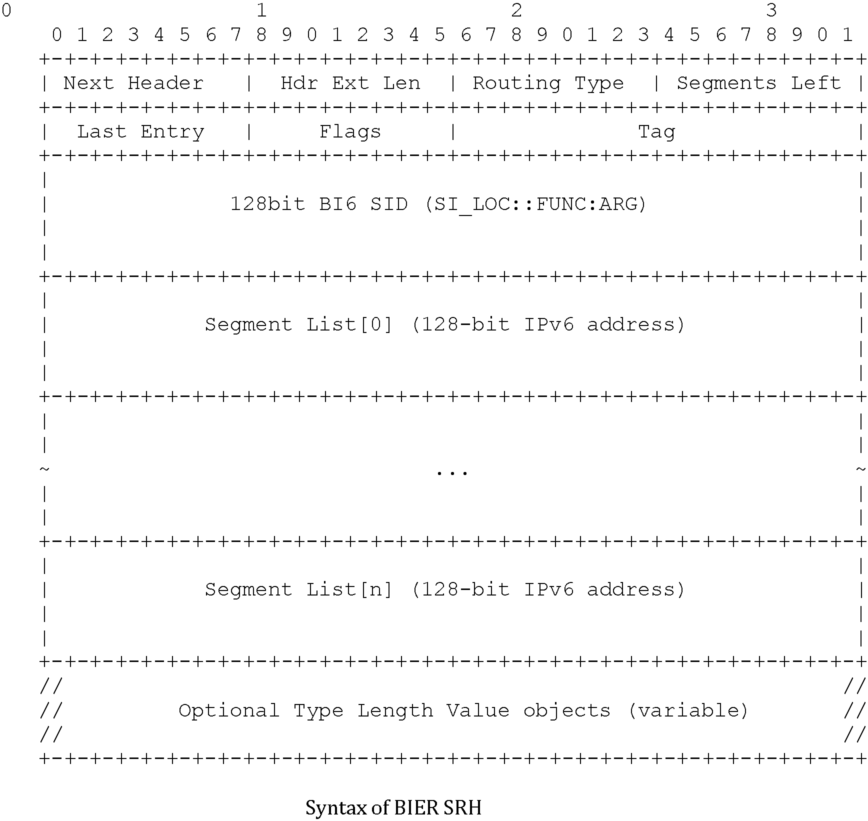

where:
Next Header: is as defined in [RFC8200], Section 4.4. Routing Header:
- 8-bit selector.
- Identifies the type of header immediately following the Routing header.
- Uses the same values as the IPv4 Protocol field for IANA, "Protocol Numbers", [IANA-PN].
Hdr Ext Len: is as defined in [RFC8200], Section 4.4: an 8-bit unsigned integer., where the length of the Routing header in 8-octet units, not including the first 8 octets.
Routing Type: is as 4, defined in [RFC8754], Section 2.
Segments Left: is as defined in [RFC8200], Section 4.4: An 8-bit unsigned integer with the number of route segments remaining, i.e., number of explicitly listed intermediate nodes still to be visited before reaching the final destination.
Last Entry: comprises the index (zero based), in the Segment List, including the SI6 SID, of the last element of the Segment List.
Flags: 8 bits of flags. RFC8754 *IPv6 Segment Routing Header (SRH)*

| |
|---|
| 0 1 2 3 4 5 6 7 |
| +-+-+-+-+-+-+-+-+ |
| \|U U U U U U U U\| |
| +-+-+-+-+-+-+-+-+" |

U: Unused and for future use, and must be 0 on transmission and ignored on receipt.

Tag: is as described in [RFC8754], Section 4.3.1. Tag a packet as part of a class or group of packets -- e.g., packets sharing the same set of properties. When Tag is not used at the source, it MUST be set to zero on transmission. When Tag is not used during SRH processing, it should be ignored. Tag is not used when processing the SID defined in Section 4.3.1. It may be used when processing other SIDs that are not defined in this document.

Segment List [0..n]: is as described in [RFC8754], Section 4.3.1. The 128-bit IPv6 addresses representing the nth segment in the Segment List. The Segment List is encoded starting from the last segment of the SR Policy. That is, the first element of the Segment List (Segment List[0]) contains the last segment of the SR Policy, the second element contains the penultimate segment of the SR Policy, and so on.

TLV: Type Length Value (TLV) is as described in [RFC8754], Section 2.1 which section defines TLVs of the Segment Routing Header. A TLV provides metadata for segment processing. TLVs are present when the Hdr Ext Len is greater than (Last Entry+1)*2. While processing TLVs at a segment endpoint, TLVs must be fully contained within the SRH as determined by the Hdr Ext Len. Detection of TLVs exceeding the boundary of the SRH Hdr Ext Len results in an ICMP Parameter Problem, Code 0, message to the Source Address, pointing to the Hdr Ext Len field of the SRH, and the packet being discarded. An implementation may limit the number and/or length of TLVs it processes based on local configuration. The implementation may stop processing additional TLVs in the SRH when these configured limits are exceeded.

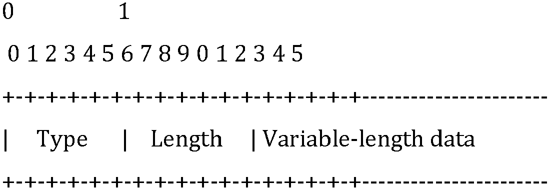

Type:
   An 8-bit codepoint from the "Segment Routing Header TLVs" . Unrecognized Types must be ignored on receipt.
Length:
   The length of the variable-length data field in bytes.
Variable-length data:
   data that is specific to the Type.

Type Length Value (TLV) entries contain optional information that may be used by the node identified in the Destination Address (DA) of the packet.

Each TLV has its own length, format, and semantic. The codepoint allocated (by IANA) to each TLV Type defines both the format and the semantic of the information carried in the TLV. Multiple TLVs may be encoded in the same SRH.

The highest-order bit of the TLV type (bit 0) specifies whether or not the TLV data of that type can change en route to the packet's final destination:
- 0: TLV data does not change en route
- 1: TLV data does change en route

All TLVs specify their alignment requirements using an xn+y format. The xn+y format is defined as per [RFC8200]. The SR source nodes use the xn+y alignment requirements of TLVs and Padding TLVs when constructing an SRH.

The Length field of the TLV is used to skip the TLV while inspecting the SRH in case the node doesn't support or recognize the Type. The Length defines the TLV length in octets, not including the Type and Length fields. Additional TLVs may be defined in the future.

### BI6 with multiple sub-domains

In a larger networks having multiple sub-domains, a router can be programmed to do ingress replication of the traffic to multiple BIER subdomains. The ingress router may introduce a path vector as a SID list on each of the packets.

### Network Overview

FIG. 1 shows a p2mp network topology.
FIG. 2 shows SRv6 BIER forwarding.

BIER architecture puts forward a multicast forwarding based on "Bit-Index-Explicit-Replication". This architecture defines a BIER domain in which an ingress router would encapsulate P2MP packet with a BIER header as described in0 RFC8296 [RFC8296] *Encapsulation for Bit Index Explicit Replication (BIER) in MPLS and Non-MPLS Networks.* This BIER packet replicates to the egress routers identified by the ingress in its BIER header, over an optimal per-flow-stateless tree discovered with the underlay.

### Subscriber management

In BIER architecture the multicast egress routers must be learned by the ingress router. This discovery can happen via some out-of-band mechanism.

### Interworking with non-compatible BI6 Routers

A network topology can have legacy devices which may not be capable of BI6 processing. When deploying BI6, the traffic may have to pass through some of these devices for loop-free forwarding.

In an implementation the system can be configured for Node-SID insertion for intermediate node tunneling.

In an implementation, a router can obtain notice about the BI6 capability of a neighboring device via the capabilities it has published in its IGP advertisement. Based on this IGP may form a map of BFER to the nearest BFR on the path to egress. If the BFR is not directly connected, thenthatBFR's node SID can be inserted into the SRH priorto forwarding the packet.

In an implementation, a router can be configured to identify the BI6 capability of all routers in an IGP area via the capabilities it has published in its IGP advertisement. Based on this IGP, the router can form a map of adjacent BFR's. An adj-BFR may be reachable over a few hops of legacy nodes. If the BFR is not directly connected, then that node computes the list of legacy nodes that must be passed through to reach that adjacent BFR. Attached to the adjacency map, the BFR must maintain the SID vector to reach that adj-BFR. When a packet gets forwarded to such an adjacency this SID vector can be inserted in that packet after doing the forwarding updates in the bitmap.

### Receiving a BI6 packet

When receiving a BI6 packet with the penultimate SID being that of itself, the router strips the SRH of all the SID's other than the BI6-SID. After this it does BIER forwarding. The process of doing BIER forwarding involves BIT string updating according to BIER principles.

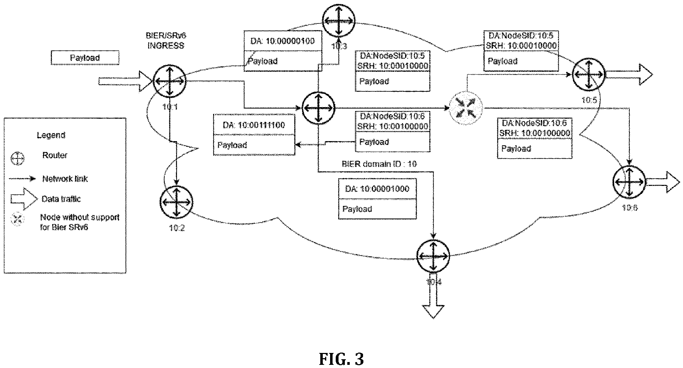

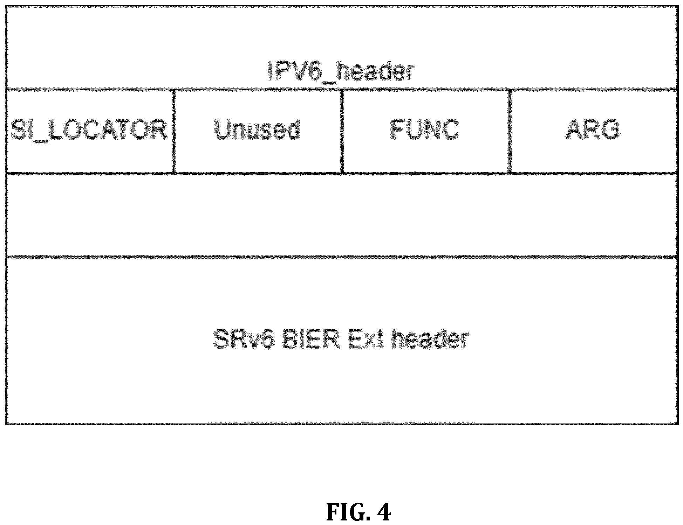

FIG. 3 shows an example of forwarding in BIER topology configured to allow traffic to pass over a legacy node.

### Routing extension header for BIER

For the topologies needing a longer bitstring to address more BFER's, the SRH as specified for SRV6 itself can be used for sending the bitmap. The following disclosure provides the procedures involved in using this extension.

The existing SRH format supports encoding a SID stack to specify a multihop routing chain. This SRH can be used for BIER bitmap by encoding the BITSTRING in the initial segment ID locations. The bitstring length is to be inferred from BIFT-ID (or from a locator) in BI6, for this specification the bitstring length can be any multiple of 128. The value of segments left are set to (length of the bitstream/128) + the number of elements present in the segment list. After the bitstring, the BI6 top-SID follows, which has the SI_Locator, ARGUMENT and FUNCTION bits.

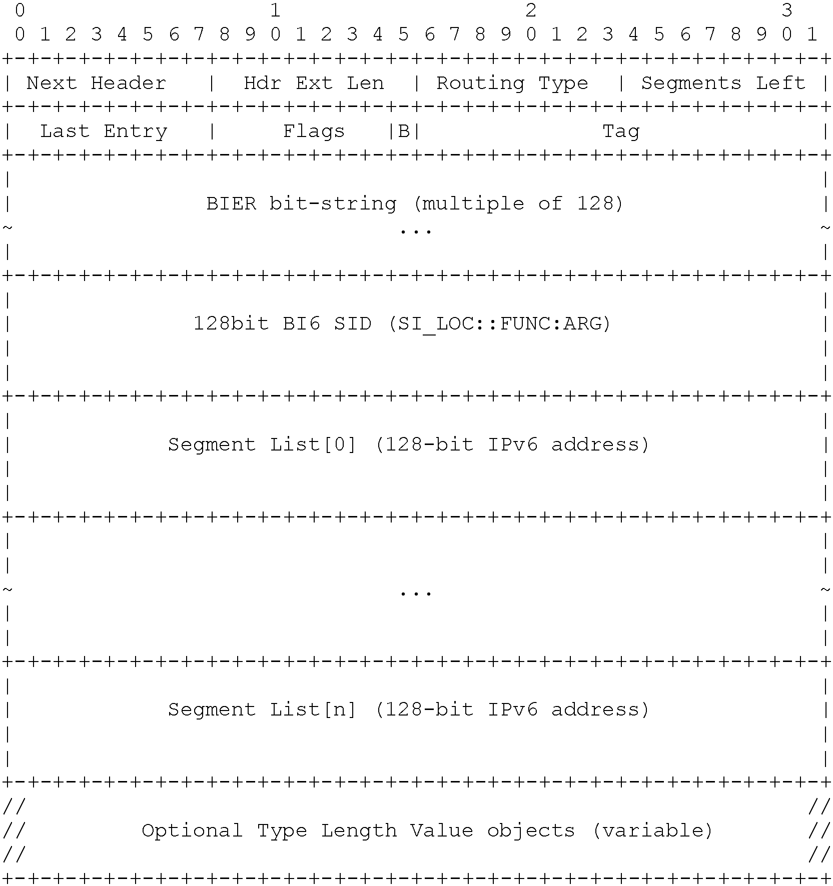

The Syntax of BIER SRH for accommodating longer bitstrings where fields are as defined above unless stated below.

As above, Flags are 8 bits of flags. [RFC8754],

| |
|---|
| 0 1 2 3 4 5 6 7 |
| |
| +-+-+-+-+-+-+-+-+ |
| \|U U U U U U U B\| |
| +-+-+-+-+-+-+-+-+ |

U: unused and for future use. MUST be 0 on transmission and ignored on receipt.
B: in this last bit is set to 1 of the SRH includes a BIER

BITSTRING. It must not set when the SRH has the SI6 SID without an explicit BIER bitmap.

BIER Bitsring: BITSRING for BIER forwarding. The size of this BITSRING is already known from the BIER configurations. It can also be identified from a packet as the bits in between the BI6 SID and the common header.

### Security Considerations

This disclosure describes a semantic for IPv6 address. As will be understood by those of skill in the art informed by the present disclosure, the security challenges that apply to IPv6 and in the BIER architecture applies to the BI6 forwarding model specified here.

### Bit-Index string length

### Private IPv6 address for operations

The Unique Local IPv6 address allocation RFC4193 *Unique Local IPv6 Unicast Addresses* [RFC4193] provides free-to-use address blocks with SI_LOCATOR size of 48. This provides a maximum BI6 addressing space of 80 bit length.

The Bit-index string length that can be used can be determined by the Solicitor prefix length and the need for FUNC and ARG bits. Hence if Unique local address space is used, up to 80 BFER's can be addressed.

### Scaling considerations

With this specification the typical scale of a BIER domain is less than 96 egress routers. On networks with larger scale an implementation can include having multiple subdomains and doing ingress replication for traffic bound to various subdomains.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the invention.

## Claims

1. A method comprising:
providing an Internet Protocol Version (IPv6) index format including a bitstring configured to address egress routers in a Bit Index Explicit Replication (BEIR) subdomain for Point-to-Multipoint delivery of data for Segment Routing (SR), the bitstring being a Bit-Index-6 format (BI6) configured to identify each of the egress routers with a Bit-Forwarding Router id (BFR-id), wherein the BFR-id translates to a Set Identifier (SI) and bitstring, wherein the SI is identified by a SI Locator, the SI Locator is a routable prefix configured to reach a specific set of the egress routers in the SI, and the IPv6 index format includes a Function bit and an Argument bit each configured as a Last Significant Bit (LSB) in an IPv6 address.

2. The method of claim 1, wherein the bitstring is encoded in a bitstring part of the BI6.

3. The method of claims 1 or 2, wherein the format comprises multiple Segment IDs (SIDs), wherein the multiple SIDs are for one or more of:
sending a packet though a predefined path to a first router of the egress routers in the BIER subdomain;
sending a packet though a legacy device that does not support BI6; or
sending a packet on to a node that is reachable over a transit LAN.

4. The method of any of the above claims, wherein the SI Locator is present in a destination address in an IPv6 header that provides a map of a Segment Routing Header (SRH).

5. The method of claim 4, wherein the SRH comprises an SID vector.

6. The method of claim 4, wherein the SRH comprises:
a Next Header configured identify a type of header immediately following ta Routing header;
a Segments Left configured to list the number of route segments remaining;
a Last Entry comprising the index in the Segment List including SID of the last element of the Segment List; and
a Segment List [0..n] configured for the 128-bit IPv6 addresses representing the nth segment in the Segment List, wherein the Segment List is encoded starting from the last segment of an SR Policy.

7. The method of claim 6, further comprising:
encoding an SID stack to specify a multihop routing chain to the SRH, and
encoding the bitstring in initial SID locations of the SRH for a BIER bitmap.

8. The method of claim 7, wherein the bitstring length is any multiple of 128, the value of Segments Left are set to a length of the bitstream divided by 128 plus the number of elements present in the Segment List and, after the bitstring, a BI6 top-SID follows, which includes the SI Locator bit, an Argument bit and a Function bit.

9. The method of claim 8, wherein the SI Locator bit has a size of 48 for a maximum BI6 addressing space of an 80 bit length, and wherein the bit-index string length is determined by a Solicitor prefix length, the Argument bit and the Function bit.

10. The method of claim of any of the above claims further comprising an ingress router that is programmed to execute ingress replication of packets to multiple BIER subdomains, wherein the ingress router is configured to introduce a path vector as an SID list on each of the packets.

11. The method of claim 7, wherein the SRH comprises Flags to mark presence of the BIER Bitmap in the SRH.

12. A method comprising:
obtaining ata router a notice of a Bit-Index-6 format (B16) capability of a neighboring device;
forming a map of a Bit-Forwarding Egress Router BFER to the nearest Bit-Forwarding Router (BFR) in an egress path; and
if a BFR is not connected, inserting the non-connected BFR's Segment ID (SID) into a packet SRH prior to forwarding the packet.

13. The method of claim 12, further comprising:
obtaining at the router a notice of a B16 capability of all routers in an Interior Gateway Protocol (IGP) area;
forming a map of adjacent BFRs;
if an adjacent BFR is reachable over legacy nodes, and if the adjacent BFR is not directly connected, computing a list of the legacy nodes that must be passed through to reach the adjacent BFR;
maintaining by the BFR an SID vector to reach the adjacent BFR; and
when the packet is forwarded to the adjacent BFR, inserting an SID vector in the packet after forwarding updates in the bitmap.

14. The method of claim 12, further comprising:
receiving at a router an BI6 packet with a penultimate SID being that of itself;
stripping the SRH of all SIDs other than the SID of the B16 packet; and
forwarding the packet.

15. An apparatus configured to perform the method of any of claims 12-14 comprising:
a router configured to at least obtain a notice of a Bit-Index-6 format (B16) capability of a neighboring device; form a map of a Bit-Forwarding Egress Router BFER to the nearest Bit-Forwarding Router (BFR) in an egress path; and if a BFR is not connected, inserting the non-connected BFR's Segment ID (SID) into a packet SRH prior to forwarding the packet.
